# EUROPÄISCHE PATENTANMELDUNG

(11) **EP 4 574 525 A1**
(43) Veröffentlichungstag der Anmeldung: **25.06.2025**
(21) Anmeldenummer: 24213308.0
(22) Anmeldetag: 15.11.2024
(51) Int. Cl.: B60L 5/39

(54) **STROMABNEHMERMONTAGEVERFAHREN UND FAHRZEUG-STROMABNEHMERANORDNUNG**

(30) Priorität: 21.12.2023 AT 510462023
(71) Anmelder: Siemens Mobility Austria GmbH, 1210 Wien (AT)
(72) Erfinder: Preiss, Mario, 8184 Anger (AT)
(74) Vertreter: Siemens Patent Attorneys

(57) **Zusammenfassung**

Die Erfindung betrifft ein Stromabnehmermontageverfahren für Fahrzeuge, insbesondere für Schienenfahrzeuge, zur Positionseinstellung eines Stromabnehmers mit einem mit einem Fahrzeug verbindbaren Träger (1) relativ zu dem Fahrzeug. Es wird vorgeschlagen, dass der Träger (1) mit einem mit einer Fahrzeugkomponente des Fahrzeugs verbundenen oder einstückig mit der Fahrzeugkomponente ausgebildeten, auskragenden Halteelement (3) gekoppelt wird, eine rotatorische Betätigungsvorrichtung (10), welche ein Gewinde aufweist, über welches ein als Spindelmutter oder Gewindemutter fungierendes Gegenstück (11) mit der Betätigungsvorrichtung (10) gekoppelt ist, an dem Haltelement (3) abgestützt wird, das Gegenstück (11) mittels einer ersten Drehbewegung der Betätigungsvorrichtung (10) oder des Gegenstücks (11) an den Träger (1) angelegt wird, und mittels einer zweiten Drehbewegung die Betätigungsvorrichtung (10) oder das Gegenstück (11) gedreht wird, wobei das Gegenstück (11) an den Träger (1) angelegt ist, wodurch der Träger (1) eine Translationsbewegung durchführt.

Dadurch wird eine ergonomische Positionseinstellbarkeit des Stromabnehmers ermöglicht.

## Beschreibung

Die Erfindung betrifft ein Stromabnehmermontageverfahren für Fahrzeuge, insbesondere für Schienenfahrzeuge, zur Positionseinstellung eines Stromabnehmers mit einem mit einem Fahrzeug verbindbaren Träger relativ zu dem Fahrzeug.

Elektrisch angetriebene Fahrzeuge, insbesondere Schienenfahrzeuge, werden häufig mittels Seitenstromabnehmern oder Stromschienen-Stromabnehmern mit Elektrizität versorgt. Dabei kann beispielsweise ein mit einem Seitenstromabnehmer verbundenes Gleitstück eine Stromschiene als Stromversorgungseinrichtung kontaktieren, welche seitlich neben einem Gleis, auf welchem die Schienenfahrzeuge fahren, angeordnet ist.

Eine Positionseinstellung (z.B. eine Höheneinstellung) von Stromabnehmern ist von großer Bedeutung, um einen elektrischen Kontakt zwischen einem Stromabnehmer und einer Stromversorgungseinrichtung in allen fahrdynamischen Zuständen eines Fahrzeugs erhalten zu können.

Um Bauteiltoleranzen und/oder Radverschleiß von Fahrzeugen kompensieren zu können, werden Seitenstromabnehmer häufig über Langlöcher, Schrauben und Zahnplatten mit Fahrwerken von Schienenfahrzeugen verbunden. Über die Zahnplatten können formschlüssige Verbindungen zwischen den Seitenstromabnehmern und den Fahrwerken realisiert werden, wobei mittels der Zahnplatten oft eine Positionseinstellung in Einstellstufen vorgenommen werden kann.

Stromabnehmer weisen darüber hinaus häufig große Massen auf, wodurch für eine Manipulation der Stromabnehmer oft Hubvorrichtungen oder eine Mehrzahl an Personen erforderlich sind oder ist. Die Manipulation erfordert häufig eine große Kraftanstrengung und es kann dabei ein nicht zu vernachlässigendes Unfallrisiko herrschen.

Aus dem Stand der Technik ist beispielsweise die EP 3 587 165 Al bekannt, in welcher ein Stromabnehmer eines Schienenfahrzeugs mit einem Stromabnehmerarm und einem mit dem Stromabnehmerarm verbundenen Gleitstück beschrieben ist. Das Gleitstück kann mittels einer Betätigungsvorrichtung an eine Stromschiene angelegt und von dieser getrennt werden. Ein Träger des Stromabnehmers ist mit einer Konsole verschraubt, welche wiederum mit einem Fahrwerksrahmen des Schienenfahrzeugs verschweißt ist.

Weiterhin zeigt die EP 4 043 269 A1 einen Stromabnehmer eines Schienenfahrzeugs mit einem Träger und einem Stromabnehmerarm mit einem Gleitstück, wobei mit dem Träger ein Aktuator verbunden ist. Eine Kolbenstange des Aktuators ist über einen ersten Hebelarm mit einem rotatorischen Kraftübersetzer verbunden, wobei der Kraftübersetzer mit dem Träger verbunden ist. Mit dem Kraftübersetzer ist ein zweiter Hebelarm verbunden, über welchen zur Auslenkung des Stromabnehmerarms Betätigungskräfte des Aktuators auf den Stromabnehmerarm übertragen werden können. Der Träger ist mit einem Fahrwerksrahmen des Schienenfahrzeugs verschraubt.

Der Erfindung liegt die Aufgabe zugrunde, ein Verfahren zur präzisen und aufwandsarmen Positionseinstellung für Stromabnehmer anzugeben.

Erfindungsgemäß wird diese Aufgabe gelöst mit einem Stromabnehmermontageverfahren gemäß Anspruch 1, bei dem der Träger mit einem mit einer Fahrzeugkomponente des Fahrzeugs verbundenen oder einstückig mit der Fahrzeugkomponente ausgebildeten, auskragenden Halteelement gekoppelt wird, eine rotatorische Betätigungsvorrichtung, welche ein Gewinde aufweist, über welches ein als Spindelmutter oder Gewindemutter fungierendes Gegenstück mit der Betätigungsvorrichtung gekoppelt ist, an dem Haltelement abgestützt wird, das Gegenstück mittels einer ersten Drehbewegung der Betätigungsvorrichtung, wobei das Gegenstück gegen Verdrehung gesichert wird, oder des Gegenstücks, wobei die Betätigungsvorrichtung gegen Verdrehung gesichert wird, an den Träger angelegt wird, und mittels einer zweiten Drehbewegung die Betätigungsvorrichtung, wobei das Gegenstück gegen Verdrehung gesichert wird, oder das Gegenstück, wobei die Betätigungsvorrichtung gegen Verdrehung gesichert wird, gedreht wird, wobei das Gegenstück an den Träger angelegt ist, wodurch der Träger eine Translationsbewegung durchführt. Durch diese Maßnahme wird eine ergonomische und stufenlose Positionseinstellbarkeit (z.B. Höheneinstellbarkeit) des Stromabnehmers mit reduziertem Kraftaufwand ermöglicht.

Der Stromabnehmer kann dabei beispielsweise zuerst angehoben und über den Träger, der beispielsweise als Gehäuse des Stromabnehmers ausgebildet sein kann, auf das Halteelement aufgehängt werden. Die Positionseinstellung (z.B. eine Höheneinstellung) des Stromabnehmers kann dann über die Betätigungsvorrichtung oder das Gegenstück vorgenommen werden. Die Betätigungsvorrichtung kann beispielsweise als Handbetätigungsvorrichtung ausgeführt sein. Denkbar ist es aber auch, dass die Betätigungsvorrichtung beispielsweise einen pneumatisch, elektrisch oder hydraulisch angetriebenen Aktuator aufweist etc.

Die Betätigungsvorrichtung kann beispielsweise zusammen mit dem Gegenstück einen Spindeltrieb bilden. Das Gewinde der Betätigungsvorrichtung kann z.B. als Trapezgewinde ausgeführt sein.

Die erste Drehbewegung und die zweite Drehbewegung können z.B. als durchgängiger Vorgang durchgeführt werden. Durch Rotation der Betätigungsvorrichtung oder des Gegenstücks kann dabei zunächst das Gegenstück an den Träger angelegt werden (z.B. an einer Unterseite einer Deckfläche des Trägers). Nach Anlegen des Gegenstücks an den Träger führt der Träger bei Fortführung der Rotation der Betätigungsvorrichtung oder des Gegenstücks die Translationsbewegung aus, wodurch die Positionseinstellung des Stromabnehmers vorgenommen werden kann.

Eine Verdrehsicherung des Gegenstücks oder der Betätigungsvorrichtung kann beispielsweise manuell vorgenommen werden. Bei der zweiten Drehbewegung ist es auch denkbar, dass z.B. die Verdrehsicherung des Gegenstücks mittels einer formschlüssigen Verbindung zwischen dem Gegenstück und dem Träger durchgeführt wird etc.

Das Halteelement kann beispielsweise in Richtung einer Fahrzeugquerachse von der Fahrzeugkomponente abstehend ausgerichtet sein. Es ist z.B. möglich, dass das Halteelement nasenförmig oder hakenförmig ausgebildet ist etc.

Weitere vorteilhafte Ausgestaltungen des erfindungsgemäßen Stromabnehmermontageverfahrens ergeben sich aus den Unteransprüchen.

Günstig ist es beispielsweise, wenn vor Durchführung der ersten Drehbewegung der Träger verschieblich mit dem Fahrzeug verbunden wird.

Dadurch wird der Stromabnehmer gehalten, lässt sich aber mittels der Betätigungsvorrichtung oder des Gegenstücks in seiner Position einstellen.

Hilfreich ist es außerdem, wenn nach Durchführung der zweiten Drehbewegung der Träger fest mit dem Fahrzeug verbunden wird. Durch diese Maßnahme kann der Stromabnehmer nach der Positionseinstellung mittels der Betätigungsvorrichtung in seiner Position fixiert werden.

Der Stromabnehmer kann beispielsweise von einem Montagezustand in einen Betriebszustand versetzt werden, indem die Betätigungsvorrichtung, nachdem der Träger fest mit dem Fahrzeug verbunden wird, von dem Träger entfernt wird.

Für eine Ausrichtung des Trägers zur Positionseinstellung kann es vorteilhaft sein, wenn der Träger zur Kopplung mit dem Halteelement in eine Vertiefung des Halteelements eingeführt wird.

Zur Ausrichtung des Trägers kann beispielsweise auch ein Führungsbolzen in der Vertiefung angeordnet sein etc. Die Vertiefung kann beispielsweise als Schlitz oder Nut ausgeführt sein etc.

Zur Ausrichtung der Betätigungsvorrichtung relativ zu dem Träger kann es empfehlenswert sein, wenn das Gegenstück einen Zentrieransatz aufweist, über welchen das Gegenstück mittels der ersten Drehbewegung in einer ersten Ausnehmung des Trägers zentriert wird.

Das Gegenstück kann beispielsweise mittels der ersten Drehbewegung in einem an die erste Ausnehmung angrenzenden Bereich des Trägers an den Träger angelegt werden etc.

Die Ausrichtung der Betätigungsvorrichtung relativ zu dem Träger kann vereinfacht werden, wenn vor Durchführung der ersten Drehbewegung die Betätigungsvorrichtung durch die erste Ausnehmung hindurchgeführt und an dem Halteelement abgestützt wird.

Dadurch wird eine Führung der Betätigungsvorrichtung durch den Träger bewirkt.

Das Gegenstück kann beispielsweise vor einem Abstützen der Betätigungsvorrichtung an dem Halteelement auf das Gewinde der Betätigungsvorrichtung aufgedreht werden etc.

Eine Höheneinstellung des Stromabnehmers wird ermöglicht, wenn die erste Drehbewegung und die zweite Drehbewegung um eine Parallele zu einer Hochachse des Trägers durchgeführt werden, wobei der Träger seine Translationsbewegung aufgrund der zweiten Drehbewegung in Richtung der Hochachse durchführt.

Eine einfache, manuelle Bedienbarkeit der Betätigungsvorrichtung wird erreicht, wenn die Betätigungsvorrichtung eine Handkurbel oder eine Handratsche ist.

Eine geeignete Arbeitsposition für die Betätigungsvorrichtung zur Positionseinstellung des Stromabnehmers wird definiert, wenn die Betätigungsvorrichtung in einer die Betätigungsvorrichtung positionierenden Aufnahme des Halteelements an dem Halteelement abgestützt wird.

Eine zur Positionseinstellung ungeeignete Positionierung der Betätigungsvorrichtung relativ zu dem Halteelement wird dadurch vermieden.

Ein erfolgversprechendes Anwendungsgebiet für das erfindungsgemäße Stromabnehmermontageverfahren wird mit einer Anordnung mit einem Fahrzeug, insbesondere Schienenfahrzeug, und mit zumindest einem Stromabnehmer erschlossen, wobei die Anordnung Mittel eingerichtet zur Durchführung des erfindungsgemäßen Stromabnehmermontageverfahrens umfasst, wobei der zumindest eine Stromabnehmer einen Träger umfasst, wobei der Träger dazu eingerichtet ist, mit einem mit einer Fahrzeugkomponente des Fahrzeugs verbundenen oder einstückig mit der Fahrzeugkomponente ausgebildeten, auskragenden Halteelement gekoppelt zu werden, eine rotatorische Betätigungsvorrichtung, welche ein Gewinde aufweist, über welches ein als Spindelmutter oder Gewindemutter fungierendes Gegenstück mit der Betätigungsvorrichtung gekoppelt ist, dazu eingerichtet ist, an dem Haltelement abgestützt zu werden, das Gegenstück dazu eingerichtet ist, mittels einer ersten Drehbewegung der Betätigungsvorrichtung, wobei das Gegenstück dazu eingerichtet ist, gegen Verdrehung gesichert zu werden, oder des Gegenstücks, wobei die Betätigungsvorrichtung dazu eingerichtet ist, gegen Verdrehung gesichert zu werden, an den Träger angelegt zu werden, und die Betätigungsvorrichtung dazu eingerichtet ist, mittels einer zweiten Drehbewegung, wobei das Gegenstück dazu eingerichtet ist, gegen Verdrehung gesichert zu werden, gedreht zu werden, oder das Gegenstück dazu eingerichtet ist, mittels der zweiten Drehbewegung, wobei die Betätigungsvorrichtung dazu eingerichtet ist, gegen Verdrehung gesichert zu werden, gedreht zu werden, wobei bei der zweiten Drehbewegung das Gegenstück an den Träger angelegt ist, wodurch der Träger dazu eingerichtet ist, eine Translationsbewegung durchzuführen.

Durch diese Maßnahme kann auf Spezialbauteile zur Stromabnehmermontage, wie z.B. auf mit der Fahrzeugkomponente verbundene, beispielsweise in die Fahrzeugkomponente eingeklebte, mit großem Aufwand zu tauschende Stiftschrauben zur Aufhängung von Stromabnehmern, verzichtet werden.

Das Halteelement kann z.B. nasenförmig oder hakenförmig ausgebildet sein und beispielsweise in Richtung einer Fahrzeugquerachse von der Fahrzeugkomponente abstehend ausgerichtet sein etc.

Eine Stromabnahme über eine Stromschiene kann beispielsweise realisiert werden, wenn der zumindest eine Stromabnehmer als Seitenstromabnehmer ausgebildet ist.

Manipulation und Positionseinstellung des Stromabnehmers werden vereinfacht, wenn der Träger zumindest eine erste Ausnehmung zur Einführung der Betätigungsvorrichtung sowie eine zweite Ausnehmung, durch welche das Halteelement hindurchführbar ist, umfasst.

Günstig ist es ferner, wenn der Träger zumindest ein erstes Langloch aufweist, über welches der Träger verschieblich oder fest mit dem Fahrzeug verbindbar ist.

Durch diese Maßnahme wird sowohl eine Führung als auch eine Arretierung des Trägers ermöglicht. Zur Arretierung des Trägers über das erste Langloch können Standardbauteile (z.B. Sechskantschrauben) eingesetzt sein.

Nachfolgend wird die Erfindung anhand von Ausführungsbeispielen näher erläutert.

Es zeigen beispielhaft:
- Fig. 1:: Ein Flussdiagramm zu einer beispielhaften Ausführungsvariante eines erfindungsgemäßen Stromabnehmermontageverfahrens,
- Fig. 2:: Einen Seitenriss eines Ausschnitts aus einer beispielhaften ersten Ausführungsvariante einer erfindungsgemäßen Anordnung mit einem Fahrzeug und einem Stromabnehmer, wobei der Stromabnehmer mit dem Fahrzeug verbunden ist, wobei mit dem Stromabnehmer eine Betätigungsvorrichtung zur Positionseinstellung des Stromabnehmers mittels der beispielhaften Ausführungsvariante eines erfindungsgemäßen Stromabnehmermontageverfahrens gemäß Fig. 1 gekoppelt ist, und
- Fig. 3:: Einen Aufriss eines Ausschnitts aus einer beispielhaften zweiten Ausführungsvariante einer erfindungsgemäßen Anordnung, wobei ein Stromabnehmer der Anordnung einen Träger umfasst, welcher ein erstes Langloch aufweist, in welches eine erste Sechskantschraube eingeführt ist.

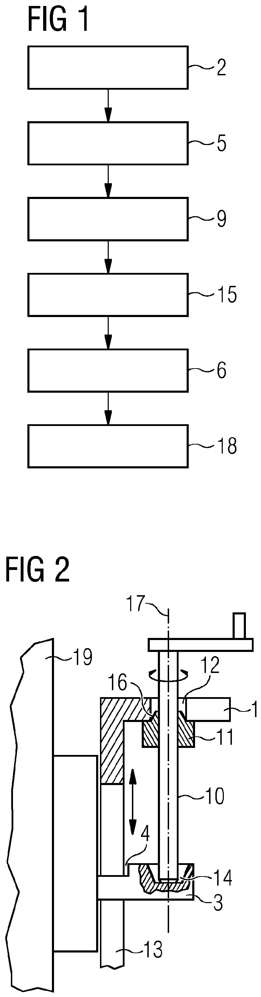

Fig. 1 zeigt ein Flussdiagramm zu einer beispielhaften Ausführungsvariante eines erfindungsgemäßen Stromabnehmermontageverfahrens für Fahrzeuge.

Das Stromabnehmermontageverfahren ist zur Positionseinstellung eines Stromabnehmers, wie er beispielhaft in Fig. 2 gezeigt ist, relativ zu einem Fahrzeug, wie es beispielhaft und ausschnittsweise in Fig. 2 dargestellt ist, eingerichtet.

Der Stromabnehmer ist als Seitenstromabnehmer ausgebildet und weist einen Träger 1 auf, welcher mit dem Fahrzeug verbunden ist. Mit dem Träger 1 sind ein Aktuator, ein Kraftübersetzer, ein mittels des Aktuators und des Kraftübersetzers beweglicher Stromabnehmerarm mit einem Gleitstück, eine mit dem Stromabnehmerarm gekoppelte Federvorrichtung sowie weitere Stromabnehmerkomponenten verbunden.

In einem Aufhängeschritt 2 wird der Träger 1 mit einem mit einer Fahrzeugkomponente des Fahrzeugs verbundenen, auskragenden Halteelement 3 des Fahrzeugs gekoppelt, wobei der Träger 1 auf das Halteelement 3 aufgehängt wird und der Träger 1 dabei in eine schlitzförmige Vertiefung 4 des Halteelements 3 eingeführt wird.

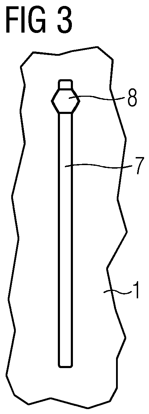

Der Träger 1 wird daraufhin in einem ersten Verbindungsschritt 5 über ein erstes Langloch 7 und eine erste Sechskantschraube 8, wie sie beispielhaft in Fig. 3 gezeigt sind, sowie über weitere Langlöcher und weitere Sechskantschrauben verschieblich mit dem Fahrzeug verbunden.

In einem Abstützschritt 9 wird dann eine beispielhaft in Fig. 2 gezeigte, als Handkurbel ausgeführte, rotatorische Betätigungsvorrichtung 10, welche an einem stangenförmigen Drehmomentübertragungselement der Betätigungsvorrichtung 10 ein Außengewinde aufweist, über welches ein Innengewinde eines als Spindelmutter fungierenden, die Betätigungsvorrichtung 10 ummantelnden Gegenstücks 11, wie es beispielhaft in Fig. 2 dargestellt ist, mit der Betätigungsvorrichtung 10 gekoppelt ist, durch eine schlüssellochförmige erste Ausnehmung 12 des Trägers 1 hindurchgeführt und in einer die Betätigungsvorrichtung 10 positionierenden, konischen Aufnahme 14 des Halteelements 3 an dem Haltelement 3 abgestützt.

Erfindungsgemäß ist es insbesondere bei beschränkten Platzverhältnissen auch vorstellbar, dass die Betätigungsvorrichtung 10 beispielsweise als Handratsche ausgebildet ist.

Nach dem Abstützschritt 9 wird ein Betätigungsschritt 15 vorgenommen, in welchem eine erste Drehbewegung und eine zweite Drehbewegung der Betätigungsvorrichtung 10, wobei das Gegenstück 11 gegen Verdrehung gesichert wird, durchgeführt werden. Das Gegenstück 11 wird dabei zunächst mittels der ersten Drehbewegung an den Träger 1 angelegt. Das Gegenstück 11 weist hierfür einen konischen Zentrieransatz 16 auf, über welchen das Gegenstück 11 mittels der ersten Drehbewegung in der ersten Ausnehmung 12 zentriert wird, wodurch ein Abgleiten der Betätigungsvorrichtung 10 vermieden wird.

Mittels der zweiten Drehbewegung wird die Betätigungsvorrichtung 10 dann weitergedreht, wodurch der Träger 1, bei an den Träger 1 angelegtem Gegenstück 11 eine Translationsbewegung durchführt.

Die erste Drehbewegung und die zweite Drehbewegung werden um eine in einer Hochachse 17 des Trägers 1 verlaufende Parallele zu der Hochachse 17 durchgeführt, wobei der Träger 1 seine Translationsbewegung aufgrund der zweiten Drehbewegung in Richtung der Hochachse 17 durchführt.

Eine Verdrehsicherung des Gegenstücks 11 wird bei der ersten Drehbewegung manuell über einen mit dem Gegenstück 11 verbundenen Handgriff vorgenommen. Zur Verdrehsicherung während der zweiten Drehbewegung klinkt eine mit dem Gegenstück 11 verbundene Passfeder in eine Passfederausnehmung in dem Träger 1 ein, wodurch das Gegenstück 11 formschlüssig mit dem Träger 1 verbunden wird. Erfindungsgemäß ist es auch vorstellbar, dass bei der ersten Drehbewegung und/oder bei der zweiten Drehbewegung das Gegenstück 11 gedreht wird und die Betätigungsvorrichtung 10 gegen Verdrehung gesichert wird.

Nach dem Betätigungsschritt 15 wird in einem zweiten Verbindungsschritt 6 der Träger 1 durch festes Anziehen der ersten Sechskantschraube 8 und der weiteren Sechskantschrauben fest mit dem Fahrzeug verbunden.

Die Betätigungsvorrichtung 10 wird dann, wenn der Träger 1 aufgrund des zweiten Verbindungsschritts 6 fest mit dem Fahrzeug verbunden ist, aus dem Gegenstück 11 herausgedreht und zusammen mit dem Gegenstück 11 von dem Träger 1 entfernt (Abschlussschritt 18).

Erfindungsgemäß ist es jedoch auch vorstellbar, dass die Betätigungsvorrichtung 10 und das Gegenstück 11 nach dem zweiten Verbindungsschritt 6 mit dem Stromabnehmer gekoppelt bleiben.

Erfindungsgemäß ist es ferner denkbar, dass beispielsweise das Gegenstück 11 vor Durchführung der zweiten Drehbewegung auf die Betätigungsvorrichtung 10 aufgedreht wird, und dann der Abstützschritt 9 vorgenommen wird, wodurch die Betätigungsvorrichtung 10 mit dem Gegenstück 11 zwischen dem Halteelement 3 und dem Träger 1 fixiert wird. Die erste Ausnehmung 12 kann hierzu beispielsweise an einem Rand des Trägers 1 geöffnet ausgebildet sein etc.

In Fig. 2 ist ein Seitenriss eines Ausschnitts aus einer beispielhaften ersten Ausführungsvariante einer erfindungsgemäßen Abordnung mit einem Fahrzeug und einem Stromabnehmer dargestellt, wobei der Stromabnehmer mit dem Fahrzeug verbunden ist.

Das Fahrzeug ist als Schienenfahrzeug ausgeführt, der Stromabnehmer als Seitenstromabnehmer. Der Stromabnehmer weist einen Träger 1 auf, welcher in jenem in Fig. 2 gezeigten Montagezustand des Stromabnehmers verschieblich mit einem Fahrwerksrahmen 19 eines Fahrwerks des Fahrzeugs verbunden ist. Der Träger 1 ist über ein erstes Langloch 7 des Trägers 1 und eine erste Sechskantschraube 8, wie sie beispielhaft in Fig. 3 gezeigt sind, sowie über weitere Langlöcher und weitere Sechskantschrauben verschieblich mit dem Fahrwerksrahmen 19 verbunden.

Mit dem Träger 1 sind ein Aktuator, ein Kraftübersetzer, ein mittels des Aktuators und des Kraftübersetzers beweglicher Stromabnehmerarm mit einem Gleitstück, eine mit dem Stromabnehmerarm gekoppelte Federvorrichtung sowie weitere Stromabnehmerkomponenten, welche in Fig. 2 nicht gezeigt sind, verbunden. Der Aktuator ist als pneumatischer ZylinderKolben-Aktuator ausgebildet. Erfindungsgemäß ist es jedoch auch denkbar, dass der Aktuator beispielsweise ein elektrischer Aktuator (z.B. ein elektrischer Linearantrieb) ist etc.

Der Träger 1 umfasst eine schlüssellochförmige erste Ausnehmung 12 zur Einführung einer rotatorischen Betätigungsvorrichtung 10 und zur Abstützung der Betätigungsvorrichtung 10 an einem mit einer Fahrzeugkomponente des Fahrzeugs verbundenen auskragenden Halteelement 3 des Fahrzeugs für den Stromabnehmer zur Positionseinstellung des Stromabnehmers.

Das Halteelement 3 ist nasenförmig ausgeführt und mit dem Fahrwerksrahmen 19 als Fahrzeugkomponente verschraubt. Der Träger 1 kann zur Montage des Stromabnehmers an dem Fahrzeug in eine Vertiefung 4 des Halteelements 3 eingeführt und so auf das Halteelement 3 aufgehängt werden, wodurch der Träger 1 zur Positionseinstellung des Stromabnehmers mit dem Halteelement 3 koppelbar ist.

Erfindungsgemäß ist es auch denkbar, dass das Halteelement 3 beispielsweise einstückig mit dem Fahrwerksrahmen 19 ausgeführt ist oder mit dem Fahrwerksrahmen 19 verschweißt ist etc.

Erfindungsgemäß ist es ferner möglich, dass an dem Fahrwerksrahmen 19 beispielsweise Anschlagkanten angeordnet sind oder dass in der Vertiefung 4 oder in einem separaten Schlitz des Halteelements 3 ein Führungsbolzen angeordnet ist, wodurch eine waagrechte Ausrichtung des Stromabnehmers vereinfacht wird.

Das Halteelement 3 ist in Richtung einer in Fig. 2 nicht gezeigten Fahrzeugquerachse, welche rechtwinklig zu einer Hochachse 17 des Trägers 1 ausgerichtet ist, von dem Fahrwerksrahmen 19 abstehend ausgerichtet.

Der Träger 1 weist ferner eine zweite Ausnehmung 13 auf, durch welche das Halteelement 3 in jenem in Fig. 2 gezeigten Montagezustand hindurchgeführt ist.

In jenem in Fig. 2 gezeigten Montagezustand ist die Betätigungsvorrichtung 10, welche als Handkurbel ausgebildet ist, von oben durch die erste Ausnehmung 12 hindurchgeführt und über ein stangenförmiges Drehmomentübertragungselement der Betätigungsvorrichtung 10 in einer konischen, positionierenden Aufnahme 14 des Halteelements 3 an dem Haltelement 3 abgestützt.

Mittels der Betätigungsvorrichtung 10 und eines Stromabnehmermontageverfahrens, wie es beispielhaft im Zusammenhang mit Fig. 1 beschrieben ist, wird die Positionseinstellung des Stromabnehmers an dem Fahrzeug vorgenommen.

Die Betätigungsvorrichtung 10 ist in jenem in Fig. 2 gezeigten Montagezustand parallel zu der Hochachse 17 ausgerichtet. Die erste Ausnehmung 12 ist in einer Deckfläche des Trägers 1, welcher L-förmig ausgeführt ist, angeordnet, während die zweite Ausnehmung 13 in einer Seitenfläche des Trägers 1 angeordnet ist.

Die Betätigungsvorrichtung 10 weist an ihrem stangenförmigen Drehmomentübertragungselement ein als Trapezgewinde ausgeführtes Außengewinde auf, über welches ein als Spindelmutter oder Gewindemutter fungierendes, das Drehmomentübertragungselement der Betätigungsvorrichtung 10 ummantelndes, zylindrisches Gegenstück 11 mit der Betätigungsvorrichtung 10 gekoppelt ist. Das Gegenstück 11 weist ein zu dem Außengewinde der Betätigungsvorrichtung 10 passendes Innengewinde auf.

Das Gegenstück 11 weist einen konischen Zentrieransatz 16 auf, über welchen das Gegenstück 11 in jenem in Fig. 2 gezeigten Montagezustand von unten in der ersten Ausnehmung 12 des Trägers 1 zentriert ist, wobei der Zentrieransatz 16 nach oben ragt. Das Gegenstück 11 ist dabei, wie im Zusammenhang mit Fig. 1 beschrieben, in einem an die erste Ausnehmung 12 angrenzenden Bereich des Trägers 1 an den Träger 1 angelegt und, wie auch im Zusammenhang mit Fig. 1 erläutert, über eine Passfederverbindung formschlüssig mit dem Träger 1 verbunden.

Da das Gegenstück 11 an den Träger 1 angelegt ist und formschlüssig mit dem Träger 1 verbunden ist, führt der Träger 1 bei Rotation des Drehmomentübertragungselements der Betätigungsvorrichtung 10 um eine in der Hochachse 17 verlaufende Parallele zu der Hochachse 17 eine Translationsbewegung in Richtung der Hochachse 17 durch, wodurch die Positionseinstellung des Stromabnehmers vorgenommen werden kann.

Zum Abschluss des beispielhaft im Zusammenhang mit Fig. 1 beschriebenen Stromabnehmermontageverfahrens können beispielsweise die Betätigungsvorrichtung 10 und das Gegenstück 11 von dem Träger 1 entfernt werden.

Der Träger 1, die Betätigungsvorrichtung 10 und das Gegenstück 11 fungieren als Mittel der Anordnung, welche zur Durchführung des Stromabnehmermontageverfahrens gemäß Fig. 1 eingerichtet sind. Diese Mittel sind konkret dazu eingerichtet, einen Aufhängeschritt 2, einen ersten Verbindungsschritt 5, einen zweiten Verbindungsschritt 6, einen Abstützschritt 9, einen Betätigungsschritt 15 sowie einen Abschlussschritt 18, wie sie beispielhaft im Zusammenhang mit Fig. 1 beschrieben sind, durchzuführen.

Fig. 3 offenbart einen Aufriss eines Ausschnitts aus einer beispielhaften zweiten Ausführungsvariante einer erfindungsgemäßen Anordnung. Die Anordnung umfasst einen Stromabnehmer mit einem Träger 1, welcher ein erstes Langloch 7 aufweist, in welches eine erste Sechskantschraube 8 eingeführt ist.

Der Träger 1 weist weitere in Fig. 3 nicht gezeigte Langlöcher auf, in welche weitere in Fig. 3 nicht dargestellte Sechskantschrauben eingeführt sind.

Über das erste Langloch 7, die weiteren Langlöcher, die erste Sechskantschraube 8 sowie die weiteren Sechskantschrauben ist der Träger 1 mit einem Fahrzeug verbunden, wie es beispielhaft im Zusammenhang mit Fig. 2 beschrieben ist. Zur Durchführung eines Stromabnehmermontageverfahrens, wie es beispielhaft im Zusammenhang mit Fig. 1 beschrieben ist, ermöglichen das erste Langloch 7, die weiteren Langlöcher, die erste Sechskantschraube 8 sowie die weiteren Sechskantschrauben eine verschiebliche Verbindung des Trägers 1 mit dem Fahrzeug, wozu die erste Sechskantschraube 8 und die weiteren Sechskantschrauben nur leicht angezogen sind. Für eine feste Verbindung zwischen dem Träger 1 und dem Fahrzeug werden die erste Sechskantschraube 8 und die weiteren Sechskantschrauben fest angezogen.

### Liste der Bezeichnungen

- 1: Träger
- 2: Aufhängeschritt
- 3: Halteelement
- 4: Vertiefung
- 5: Erster Verbindungsschritt
- 6: Zweiter Verbindungsschritt
- 7: Erstes Langloch
- 8: Erste Sechskantschraube
- 9: Abstützschritt
- 10: Betätigungsvorrichtung
- 11: Gegenstück
- 12: Erste Ausnehmung
- 13: Zweite Ausnehmung
- 14: Aufnahme
- 15: Betätigungsschritt
- 16: Zentrieransatz
- 17: Hochachse
- 18: Abschlussschritt
- 19: Fahrwerksrahmen

## Patentansprüche

1. Stromabnehmermontageverfahren für Fahrzeuge, insbesondere für Schienenfahrzeuge, zur Positionseinstellung eines Stromabnehmers mit einem mit einem Fahrzeug verbindbaren Träger (1) relativ zu dem Fahrzeug, **dadurch gekennzeichnet, dass** der Träger (1) mit einem mit einer Fahrzeugkomponente des Fahrzeugs verbundenen oder einstückig mit der Fahrzeugkomponente ausgebildeten, auskragenden Halteelement (3) gekoppelt wird, eine rotatorische Betätigungsvorrichtung (10), welche ein Gewinde aufweist, über welches ein als Spindelmutter oder Gewindemutter fungierendes Gegenstück (11) mit der Betätigungsvorrichtung (10) gekoppelt ist, an dem Haltelement (3) abgestützt wird, das Gegenstück (11) mittels einer ersten Drehbewegung der Betätigungsvorrichtung (10), wobei das Gegenstück (11) gegen Verdrehung gesichert wird, oder des Gegenstücks (11), wobei die Betätigungsvorrichtung (10) gegen Verdrehung gesichert wird, an den Träger (1) angelegt wird, und mittels einer zweiten Drehbewegung die Betätigungsvorrichtung (10), wobei das Gegenstück (11) gegen Verdrehung gesichert wird, oder das Gegenstück (11), wobei die Betätigungsvorrichtung (10) gegen Verdrehung gesichert wird, gedreht wird, wobei das Gegenstück (11) an den Träger (1) angelegt ist, wodurch der Träger (1) eine Translationsbewegung durchführt.

2. Stromabnehmermontageverfahren nach Anspruch 1, **dadurch gekennzeichnet, dass** vor Durchführung der ersten Drehbewegung der Träger (1) verschieblich mit dem Fahrzeug verbunden wird.

3. Stromabnehmermontageverfahren nach Anspruch 1 oder 2, **dadurch gekennzeichnet, dass** nach Durchführung der zweiten Drehbewegung der Träger (1) fest mit dem Fahrzeug verbunden wird.

4. Stromabnehmermontageverfahren nach Anspruch 3, **dadurch gekennzeichnet, dass** die Betätigungsvorrichtung (10), nachdem der Träger (1) fest mit dem Fahrzeug verbunden wird, von dem Träger (1) entfernt wird.

5. Stromabnehmermontageverfahren nach einem der Ansprüche 1 bis 4, **dadurch gekennzeichnet, dass** der Träger (1) zur Kopplung mit dem Halteelement (3) in eine Vertiefung (4) des Halteelements (3) eingeführt wird.

6. Stromabnehmermontageverfahren nach einem der Ansprüche 1 bis 5, **dadurch gekennzeichnet, dass** das Gegenstück (11) einen Zentrieransatz (16) aufweist, über welchen das Gegenstück (11) mittels der ersten Drehbewegung in einer ersten Ausnehmung (12) des Trägers (1) zentriert wird.

7. Stromabnehmermontageverfahren nach Anspruch 6, **dadurch gekennzeichnet, dass** vor Durchführung der ersten Drehbewegung die Betätigungsvorrichtung (10) durch die erste Ausnehmung (12) hindurchgeführt und an dem Halteelement (3) abgestützt wird.

8. Stromabnehmermontageverfahren nach einem der Ansprüche 1 bis 7, **dadurch gekennzeichnet, dass** die erste Drehbewegung und die zweite Drehbewegung um eine Parallele zu einer Hochachse (17) des Trägers (1) durchgeführt werden, wobei der Träger (1) seine Translationsbewegung aufgrund der zweiten Drehbewegung in Richtung der Hochachse (17) durchführt.

9. Stromabnehmermontageverfahren nach einem der Ansprüche 1 bis 8, **dadurch gekennzeichnet, dass** die Betätigungsvorrichtung (10) eine Handkurbel oder eine Handratsche ist.

10. Stromabnehmermontageverfahren nach einem der Ansprüche 1 bis 9, **dadurch gekennzeichnet, dass** die Betätigungsvorrichtung (10) in einer die Betätigungsvorrichtung (10) positionierenden Aufnahme (14) des Halteelements (3) an dem Halteelement (3) abgestützt wird.

11. Anordnung mit einem Fahrzeug, insbesondere Schienenfahrzeug, und mit zumindest einem Stromabnehmer, die Anordnung umfassend Mittel eingerichtet zur Durchführung eines Stromabnehmermontageverfahrens nach einem der Ansprüche 1 bis 10, **dadurch gekennzeichnet, dass** der zumindest eine Stromabnehmer einen Träger (1) umfasst, wobei der Träger (1) dazu eingerichtet ist, mit einem mit einer Fahrzeugkomponente des Fahrzeugs verbundenen oder einstückig mit der Fahrzeugkomponente ausgebildeten, auskragenden Halteelement (3) gekoppelt zu werden, eine rotatorische Betätigungsvorrichtung (10), welche ein Gewinde aufweist, über welches ein als Spindelmutter oder Gewindemutter fungierendes Gegenstück (11) mit der Betätigungsvorrichtung (10) gekoppelt ist, dazu eingerichtet ist, an dem Haltelement (3) abgestützt zu werden, das Gegenstück (11) dazu eingerichtet ist, mittels einer ersten Drehbewegung der Betätigungsvorrichtung (10), wobei das Gegenstück (11) dazu eingerichtet ist, gegen Verdrehung gesichert zu werden, oder des Gegenstücks (11), wobei die Betätigungsvorrichtung (10) dazu eingerichtet ist, gegen Verdrehung gesichert zu werden, an den Träger (1) angelegt zu werden, und die Betätigungsvorrichtung (10) dazu eingerichtet ist, mittels einer zweiten Drehbewegung, wobei das Gegenstück (11) dazu eingerichtet ist, gegen Verdrehung gesichert zu werden, gedreht zu werden, oder das Gegenstück (11) dazu eingerichtet ist, mittels der zweiten Drehbewegung, wobei die Betätigungsvorrichtung (10) dazu eingerichtet ist, gegen Verdrehung gesichert zu werden, gedreht zu werden, wobei bei der zweiten Drehbewegung das Gegenstück (11) an den Träger (1) angelegt ist, wodurch der Träger (1) dazu eingerichtet ist, eine Translationsbewegung durchzuführen.

12. Anordnung nach Anspruch 11, **dadurch gekennzeichnet, dass** der zumindest eine Stromabnehmer als Seitenstromabnehmer ausgebildet ist.

13. Anordnung nach Anspruch 11 oder 12, **dadurch gekennzeichnet, dass** der Träger (1) zumindest eine erste Ausnehmung (12) zur Einführung der Betätigungsvorrichtung (10) sowie eine zweite Ausnehmung (13), durch welche das Halteelement (3) hindurchführbar ist, umfasst.

14. Anordnung nach Anspruch 13, **dadurch gekennzeichnet, dass** der Träger (1) zumindest ein erstes Langloch (7) aufweist, über welches der Träger (1) verschieblich oder fest mit dem Fahrzeug verbindbar ist.
